# EUROPÄISCHE PATENTSCHRIFT

(11) **EP 2 078 583 B1**
(45) Veröffentlichungstag und Bekanntmachung des Hinweises auf die Patenterteilung: **21.04.2010**
(21) Anmeldenummer: 08000520.0
(22) Anmeldetag: 12.01.2008
(51) Int. Cl.: B23K 26/14, B23Q 3/155, B23Q 3/157

(54) **Maschinelle Vorrichtung zur Montage und/oder zur Demontage einer Laserdüse sowie Laserbearbeitungsmaschine mit einer derartigen maschinellen Vorrichtung**
Mechanical device for assembling and/or disassembling a laser nozzle and laser processing machine with such a device
Dispositif mécanique destiné au montage et/ou au démontage d'une tuyère laser et machine de traitement laser dotée d'un tel dispositif mécanique

(43) Veröffentlichungstag der Anmeldung: 15.07.2009
(73) Patentinhaber: Trumpf Maschinen AG, 6341 Baar (CH)
(72) Erfinder: Erlenmaier, Werner, 70839 Gerlingen (DE); Schmauder, Frank, 72555 Metzingen (DE); Felber, Armin, 8807 Freienbach (CH); Gedeon, Reto, 6331 Hünenberg (CH)
(74) Vertreter: Kohler Schmid Möbus

(56) Entgegenhaltungen:
- DE-A1-102006 028 730
- FR-A- 2 547 230
- JP-A- 6 023 580
- JP-A- 58 192 731

## Beschreibung

Die Erfindung betrifft eine maschinelle Vorrichtung zur Montage und/oder zur Demontage einer Laserdüse an einer Düsenaufnahme einer Laserbearbeitungsmaschine zum Bearbeiten von Werkstücken, insbesondere von Blechen,
- mit einem Düsenmagazin mit einem Düsenhalterträger,
- mit einem Düsenhalter für eine Laserdüse, der an dem Düsenhalterträger des Düsenmagazins gelagert ist sowie
- mit einem Träger-Zustellantrieb, mittels dessen der Düsenhalterträger gemeinsam mit dem Düsenhalter in einer Träger-Zustellrichtung zustellbar ist.
Die Erfindung betrifft des weiteren eine Laserbearbeitungsmaschine zum Bearbeiten von Werkstücken, insbesondere von Blechen, wobei die Laserbearbeitungsmaschine eine maschinelle Vorrichtung der vorstehenden Art aufweist.

Gattungsgemäßer Stand der Technik ist bekannt aus JP 06 023580 A. Diese Druckschrift offenbart eine maschinelle Düsenwechselvorrichtung, die an einer Laserbearbeitungsmaschine auf der Oberseite eines horizontalen Werkstücktisches montiert ist. Ein als Revolvermagazin ausgebildetes Düsenmagazin der Düsenwechselvorrichtung umfasst einen Magazinrevolver, der um eine vertikale Revolver-Drehachse gedreht werden kann. An dem Magazinrevolver gelagert sind mehrere in Drehrichtung um die Revolver-Drehachse voneinander beabstandete Düsenhalter. Diese dienen zur Aufnahme jeweils, einer Laserdüse, wie sie an einem Laserbearbeitungskopf der vorbekannten Maschine zum Einsatz kommt.

Zum Düsenwechsel an dem Laserbearbeitungskopf werden der Werkstücktisch der Laserbearbeitungsmaschine und der Laserbearbeitungskopf relativ zueinander in horizontaler Richtung bewegt, bis der Laserbearbeitungskopf mit der auszuwechselnden Laserdüse oberhalb eines leeren Düsenhalters des Düsenmagazins der Düsenwechselvorrichtung liegt. Anschließend wird der Laserbearbeitungskopf zu der Düsenwechselvorrichtung hin abgesenkt. Dabei kommt die zu demontierende Laserdüse im Innern des zuvor leeren Düsenhalters zu liegen. Durch entsprechende Drehbewegung des Düsenhalters wird dann die Laserdüse aus einer Düsenaufnahme des Laserbearbeitungskopfes ausgeschraubt. Nach der Demontage der gebrauchten Laserdüse werden der Magazinrevolver der Düsenwechselvorrichtung und der Laserbearbeitungskopf der vorbekannten Maschine relativ zueinander bewegt, bis der mit der zu montierenden Laserdüse belegte Düsenhalter des Düsenmagazins der Düsenaufnahme an dem Laserbearbeitungskopf in vertikaler Richtung gegenüberliegt. Unter Absenken des Laserbearbeitungskopfes wird dann die neue Laserdüse in die Düsenaufnahme an dem Laserbearbeitungskopf eingeschraubt.

Eine flexibel anordenbare Vorrichtung zur Montage und/oder zur Demontage von Laserdüsen sowie eine mit einer derartigen Anordnung versehene Laserbearbeitungsmaschine bereitzustellen, hat sich die vorliegende Erfindung ausgehend von dem beschriebenen Stand der Technik zum Ziel gesetzt.

Erfindungsgemäß gelöst wird diese Aufgabe durch die maschinelle Vorrichtung gemäß Patentanspruch 1 sowie durch die Laserbearbeitungsmaschine gemäß Patentanspruch 9.

Die erfindungsgemäße Montage- und/oder Demontagevorrichtung bietet die Möglichkeit, Düsenhalter beispielsweise beim Düsenwechsel in zwei quer zueinander verlaufenden Richtungen zuzustellen. In beiden Richtungen können der oder die Düsenhalter der Vorrichtung gegenüber der Düsenaufnahme einer Laserbearbeitungsmaschine positioniert werden. Aufgrund der Positionierbarkeit des oder der Düsenhalter lässt sich der Einbauort der erfindungsgemäßen Vorrichtung zur Montage und/oder zur Demontage von Laserdüsen flexibel wählen, ohne dass die für die Düsenmontage bzw. - demontage erforderliche gegenseitige Zugänglichkeit von Düsenhalter und maschinenseitiger Düsenaufnahme beeinträchtigt wäre. Realisiert wird die Düsenhalterbewegung zum einen mittels des anspruchsgemäßen Träger-Zustellantriebes und zum andern mittels der erfindungsgemäßen Hubvorrichtung. Der Träger-Zustellantrieb positioniert den Düsenhalterträger sowie den oder die daran gelagerten Düsenhalter in der Träger-Zustellrichtung. Die Hubvorrichtung dient dazu, den oder die Düsenhalter gegenüber dem Düsenhalterträger in Querrichtung der Träger-Zustellrichtung zu bewegen.

Besondere Ausführungsarten der Erfindung gemäß den Patentansprüchen 1 und 9 ergeben sich aus den abhängigen Patentansprüchen 2 bis 8.

Die Patentansprüche 2 bis 5 betreffen Erfindungsbauarten, die sich durch eine konstruktiv einfache und funktionssichere Bauweise der Hubvorrichtung für den oder die Düsenhalter auszeichnen.

Gemäß Patentanspruch 6 ist in bevorzugter Ausgestaltung der Erfindung vorgesehen, dass der gegenüber dem Düsenhalterträger in Zustell-Hubrichtung angehobene Düsenhalter eine Montage- oder eine Demontagedrehbewegung ausführen und dadurch eine Laserdüse an der Düsenaufnahme einer Laserbearbeitungsmaschine insbesondere ein- oder ausschrauben kann.

In bevorzugter Ausgestaltung der Erfindung wird ausweislich Patentanspruch 7 das Aushebeelement der Hubvorrichtung für den Düsenhalter als Getriebeelement des Drehantriebes verwendet, mittels dessen sich der in der Zustell-Hubrichtung zugestellte Düsenhalter in der Montage-Drehrichtung und/oder in der Demontage-Drehrichtung antreiben lässt.

Im Falle einer weiteren bevorzugten Ausführungsform der Erfindung ist das Düsenmagazin der maschinellen Vorrichtung zur Montage und/oder zur Demontage von Laserdüsen als Revolvermagazin ausgebildet, an welchem ein Magazinrevolver den oder die Düsenhalter lagert (Patentanspruch 8). Diese Erfindungsbauart zeichnet sich durch eine besonders kompakte Bauweise aus.

Nachfolgend wird die Erfindung anhand beispielhafter schematischer Darstellungen näher erläutert. Es zeigen:
- Fig. 1: eine maschinelle Düsenwechselvorrichtung mit einem als Revolvermagazin ausgebildeten Düsenmagazin, dessen Magazinrevolver eine erste Drehstellung einnimmt,
- Fig. 2: die Anordnung gemäß Figur 1 mit einer zweiten Drehstellung des Magazinrevolvers,
- Fig. 3: die Anordnung gemäß Figur 2 mit einem aus dem Magazinrevolver ausgehobenen Düsenhalter,
- Fig. 4: eine stark schematisierte Darstellung einer Laserbearbeitungsmaschine mit der maschinellen Düsenwechselvorrichtung gemäß Figur 1,
- Fig. 5: die Anordnung gemäß Figur 4 mit der maschinellen Düsenwechselvorrichtung gemäß Figur 2 und
- Fig. 6: die Anordnung gemäß Figur 5 mit der maschinellen Düsenwechselvorrichtung gemäß Figur 3.

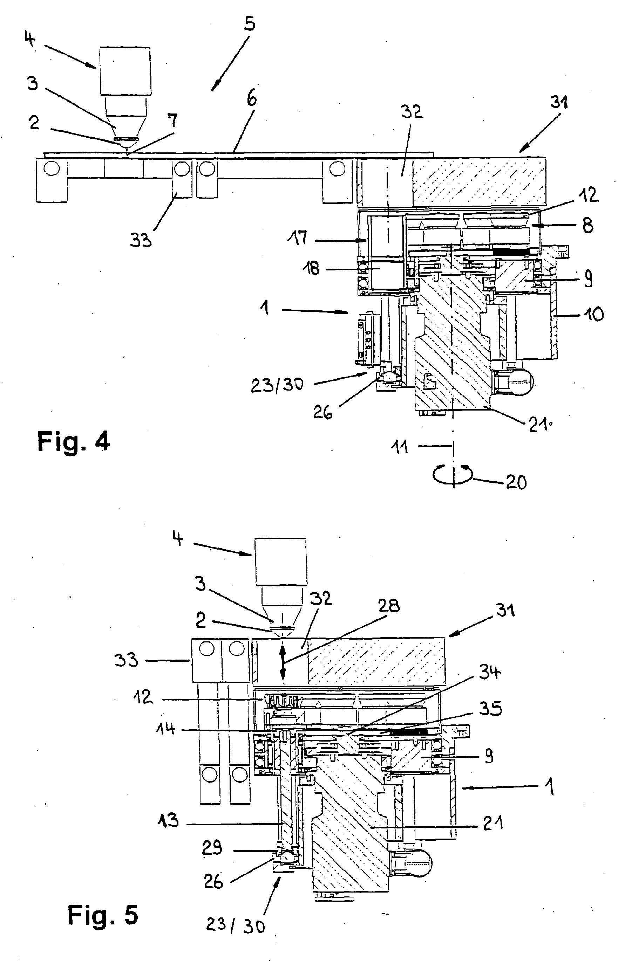

Eine in den Abbildungen dargestellte Düsenwechselvorrichtung 1 dient als maschinelle Vorrichtung zur Montage und/oder zur Demontage von Laserdüsen 2 an einer Düsenaufnahme 3, die ihrerseits an einem Laserbearbeitungskopf 4 einer Laserbearbeitungsmaschine 5 vorgesehen ist. Ausweislich Figur 4 wird an der Laserbearbeitungsmaschine 5 bei regulärem Betrieb ein Blech 6 mittels eines Laserschneidstrahls 7 geschnitten.

Die Düsenwechselvorrichtung 1 umfasst ein als Revolvermagazin 8 ausgebildetes Düsenmagazin. Ein als Düsenhalterträger fungierender Magazinrevolver 9 ist an einem Gehäuse 10 der Düsenwechselvorrichtung 1 um eine Revolver-Drehachse 11 drehbar gelagert.

Mehrere Düsenhalter 12 sind in den Magazinrevolver 9 eingesetzt. An jedem der Düsenhalter 12 ist ein schaftartiges Aushebeelement 13 angebracht, das nach lunten hin über den Magazinrevolver 9 vorsteht und das einen von der Kreisform abweichenden Querschnitt besitzt. An der Oberseite des Magazinrevolvers 9 sind Planeten-Zahnräder 14 jeweils um eine Zahnrad-Drehachse 15 drehbar gelagert. Die Zahnrad-Drehachsen 15 bilden gleichzeitig Düsenhalter-Drehachsen aus.

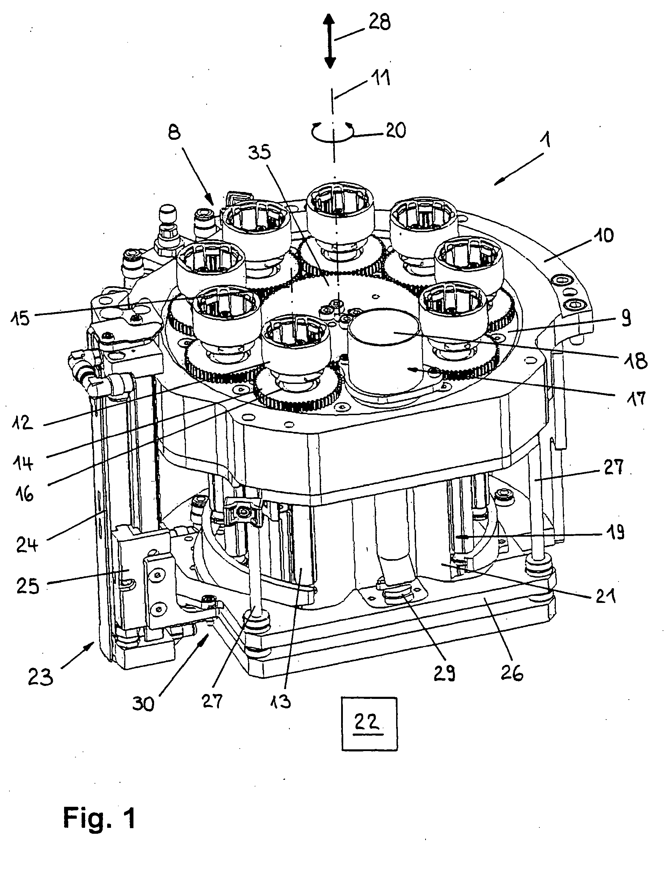

Die Planeten-Zahnräder 14 besitzen jeweils eine Innenaussparung 16, an welcher sie von dem schaftartigen Aushebeelement 13 des betreffenden Düsenhalters 12 in vertikaler Richtung durchsetzt werden. Zusätzlich zu den Düsenhaltern 12 ist an dem Magazinrevolver 9 des Revolvermagazins 8 eine so genannte "Blindstation" 17 mit einem hohlzylinderartigen Durchlass 18 vorgesehen. Der Einfachheit halber sind in den Figuren 1 bis 3 alle Düsenhalter 12 leer, d.h. ohne Laserdüse 2 dargestellt. Im betrieblichen Einsatz der Düsenwechselvorrichtung 1 an der Laserbearbeitungsmaschine 5 ist wenigstens ein Düsenhalter 12 mit einer an dem Laserbearbeitungskopf 4 zu montierenden Laserdüse 2 beleg.

Mittels eines Träger- bzw. Revolver-Zustellantriebes 19 kann der Magazinrevolver 9 in einer durch einen Doppelpfeil 20 veranschaulichten Träger- bzw. Revolver-Zustellrichtung um die Revolver-Drehachse 11 in unterschiedliche Drehstellungen bewegt werden. Wesentlicher Bestandteil des Revolver-Zustellantriebes 19 ist ein elektrischer Revolver-Zustellmotor 21, der mittels einer in den Figuren 1 bis 3 angedeuteten numerischen Antriebssteuerung 22 gesteuert wird. Die numerische Antriebssteuerung 22 ist bei Einsatz der Düsenwechselvorrichtung 1 als Teil der Laserbearbeitungsmaschine 5 in deren CNC-Steuerung integriert.

Zusätzlich zu dem Revolver-Zustellantrieb 19 verfügt die Düsenwechselvorrichtung 1 über einen pneumatischen Hubantrieb 23, der seinerseits einen an dem Gehäuse 10 der Düsenwechselvorrichtung 1 befestigten Hubzylinder 24 umfasst und der gleichfalls von der Antriebssteuerung 22 gesteuert wird.

Im Innern des Hubzylinders 24 ist ein in den Abbildungen nicht sichtbarer Kolben in vertikaler Richtung beweglich geführt. Ohne Zwischenschaltung einer Kolbenstange ist der Kolben des pneumatischen Hubantriebes 23 mit einem Zwischenstück 25 verbunden, das seinerseits an einem als Hubplatte 26 ausgebildeten Heber angreift. Die Hubplatte 26 ist an Führungsstangen 27 des Gehäuses 10 der Düsenwechselvorrichtung 1 in einer vertikalen Zustell-Hubrichtung (Doppelpfeil 28) bewegbar geführt. Zwischen den Führungsstangen 27 ist an der Hubplatte 26 eine in Revolver-Zustellrichtung 20 offene Schaftaufnahme 29 für das freie Ende der an den Düsenhaltern 12 angebrachten schaftartigen Aushebeelemente 13 vorgesehen. Ebenso wie der pneumatische Hubantrieb 23 sind auch die Hubplatte 26 und die Aushebeelemente 13 Teil einer Hubvorrichtung 30 für die Düsenhalter 12.

Der in Figur 1 veranschaulichte Betriebszustand der Düsenwechselvorrichtung 1 ist dem regulären Betrieb der Laserbearbeitungsmaschine 5 zugeordnet. An der Düsenwechselvorrichtung 1 liegt die Blindstation 17 mit dem hohlzylinderartigen Durchlass 18 oberhalb der an der Hubplatte 26 der Hubvorrichtung 30 vorgesehenen Schaftaufnahme 29.

An der Laserbearbeitungsmaschine 5 ist die Düsenwechselvorrichtung 1 gemäß den Figuren 4 bis 6 an der Unterseite einer Werkstückauflage 31 der Laserbearbeitungsmaschine 5 angeordnet.

Bei regulärem Schneidbetrieb der Laserbearbeitungsmaschine 5 und dementsprechend bei dem in Figur 1 dargestellten Betriebszustand der Düsenwechselvorrichtung 1 befindet sich die Blindstation 17 bzw. deren hohlzylinderartiger Durchlass 18 ausweislich Figur 4 unterhalb einer Durchtrittsöffnung 32 der Werkstückauflage 31. Schmutzpartikel, insbesondere bei der schneidenden Bearbeitung des Bleches 6 erzeugte Schlacke und Metallspritzer, können die Düsenwechselvorrichtung 1 durch den hohlzylinderartigen Durchlass 18 der Blindstation 17 hindurch unter Schwerkraftwirkung passieren, während die Düsenhalter 12 des Revolvermagazins 8 in einer von der Durchtrittsöffnung 32 der Werkstückauflage 31 abliegenden Position gegen unerwünschte Verschmutzung geschützt sind.

Ist die an dem Laserbearbeitungskopf 4 der Laserbearbeitungsmaschine 5 montierte Laserdüse 2 beispielsweise aufgrund eines Wechsels des zu bearbeitenden Materials oder verschmutzungsbedingt gegen eine andere Laserdüse 2 auszutauschen, so wird während einer Unterbrechung des regulären Schneidbetriebes der Laserbearbeitungsmaschine 5 zunächst eine an der Werkstückauflage 31 der Laserbearbeitungsmaschine 5 vorgesehene Ausschleusklappe 33 aus dem geschlossenen Zustand gemäß Figur 4 geöffnet. Anschließend werden der Laserbearbeitungskopf 4 einerseits und die Werkstückauflage 31 mit der Düsenwechselvorrichtung 1 andererseits relativ zueinander in horizontaler Richtung bewegt, bis der Laserbearbeitungskopf 4 mit der auszuwechselnden Laserdüse 2 über der Durchtrittsöffnung 32 der Werkstückauflage 31 zu liegen kommt. Gleichzeitig mit der beschriebenen Relativbewegung von Laserbearbeitungskopf 4 und Werkstückauflage 31 bzw. Düsenwechselvorrichtung 1 wird der Revolver-Zustellmotor 21 der Düsenwechselvorrichtung 1 betätigt. Durch die Antriebssteuerung 22 gesteuert bewegt der Revolver-Zustellmotor 21 den Magazinrevolver 9 der Düsenwechselvorrichtung 1 in der Revolver-Zustellrichtung 20 über einen definierten Drehwinkel. Der Magazinrevolver 9 ist dabei über eine nicht im Einzelnen gezeigte schaltbare Kupplung mit dem Revolver-Zustellmotor 21 antriebsverbunden.

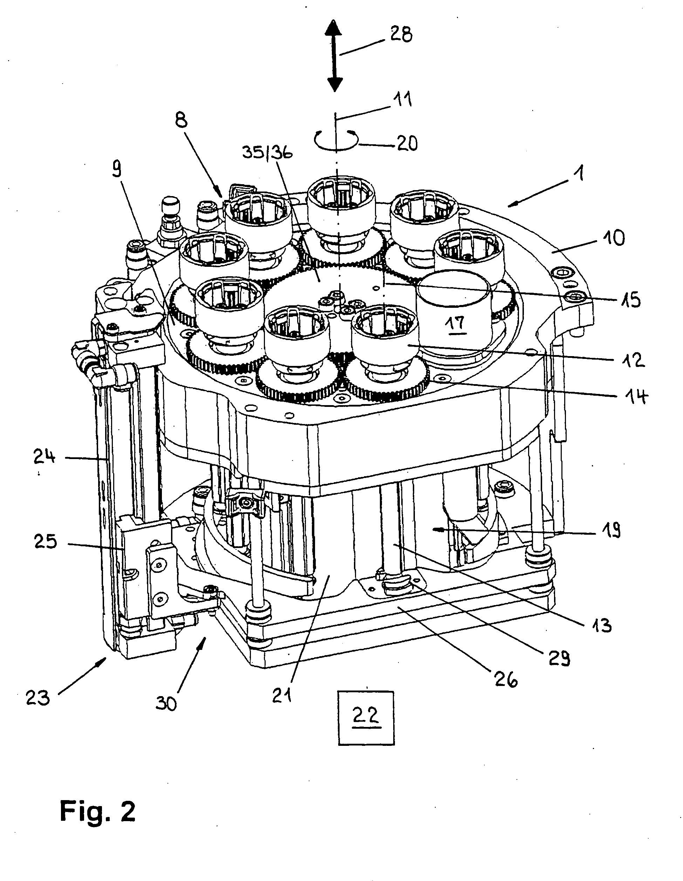

Die Zustellbewegung des Magazinrevolvers 9 endet, sobald ein leerer Düsenhalter 12, welcher auf die Blindstation 17 in Drehrichtung folgt, in die Hub-Bereitschaftsposition gemäß Figur 2 gelangt. In der Hub-Bereitschaftsposition liegt der leere Düsenhalter 12 oberhalb der Schaftaufnahme 29 an der Hubplatte 26 der Hubvorrichtung 30. Das an dem leeren Düsenhalter 12 vorgesehene schaftartige Aushebeelement 13 ist dabei mit seinem freien unteren Ende in die Schaftaufnahme 29 an der Hubplatte 26 eingelaufen und wird von der Hubplatte 26 an der von dem Düsenhalter 12 abliegenden Seite hintergriffen.

Die Verhältnisse, die sich an der Laserbearbeitungsmaschine 5 bei dem in Figur 2 dargestellten Betriebszustand der Düsenwechselvorrichtung 1 ergeben, sind aus Figur 5 ersichtlich.

Demnach liegt der leere Düsenhalter 12 unterhalb der Durchtrittsöffnung 32 der Werkstückauflage 31 und dabei der zu demontierenden Laserdüse 2 in Zustell-Hubrichtung 28 gegenüber.

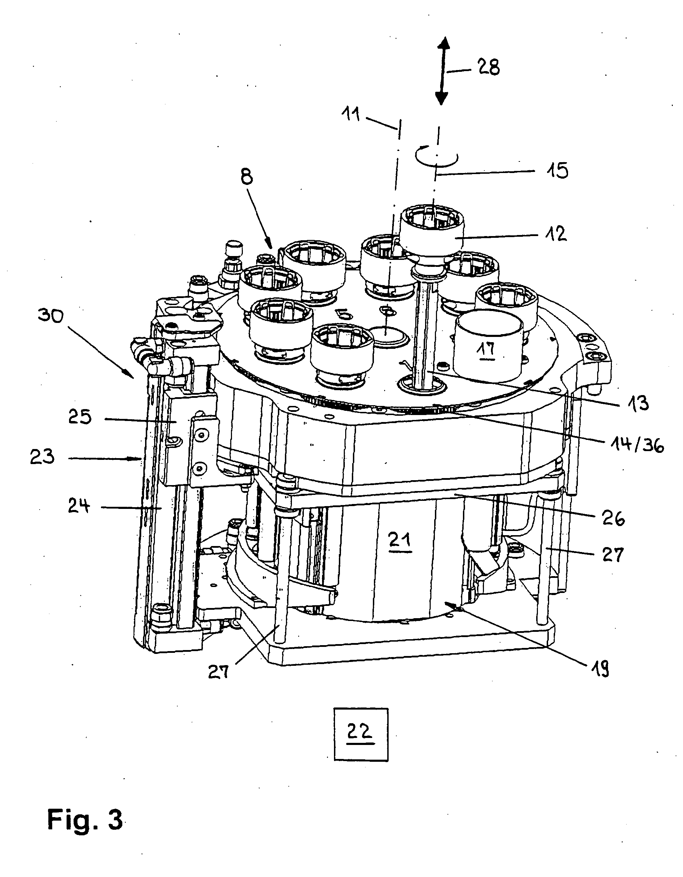

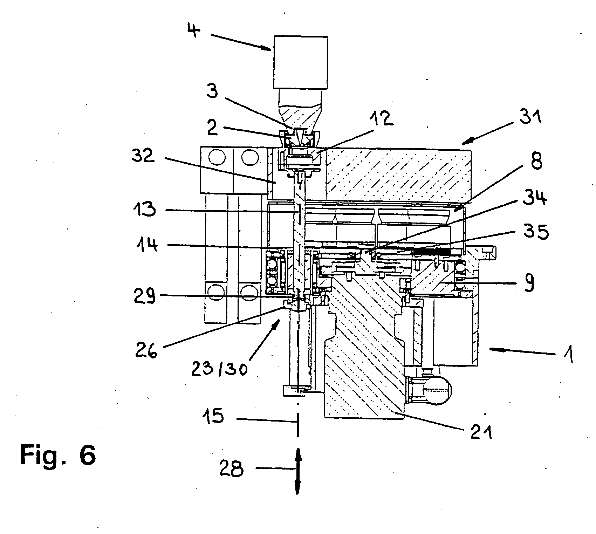

Ausgehend von diesen Verhältnissen wird der Hubantrieb 23 von der Antriebssteuerung 22 gesteuert betätigt. Die Hubplatte 26 der Hubvorrichtung 30 bewegt sich nach oben und hebt dabei über das schaftartige Aushebeelement 13 den leeren Düsenhalter 12 aus seiner Lagerung an dem Magazinrevolver 9 des Revolvermagazins 8 aus. Infolge der Aufwärtsbewegung des leeren Düsenhalters 12 gelangt die Laserdüse 2 an dem Laserbearbeitungskopf 4 in das Innere des Düsenhalters 12. Es ergibt sich damit die in Figur 6 dargestellte Situation. Die Düsenwechseleinrichtung 1 befindet sich in dem Betriebszustand gemäß Figur 3. In Figur 3 sind beispielsweise die Planeten-Zahnräder 14 abweichend von den Figuren 1 und 2 mit einer Abdeckung versehen. Bei dem Betriebszustand gemäß den Figuren 3 und 6 ist mittels der nicht im Einzelnen gezeigten Schalteinrichtung der Revolver-Zustellmotor 21 von dem Magazinrevolver 9 abgekuppelt.

Der Revolver-Zustellmotor 21 wird in Gang gesetzt und treibt über ein an einer Motorwelle 34 angebrachtes Sonnen-Zahnrad 35 die an dem nun drehfesten Magazinrevolver 9 drehbar gelagerten Planeten-Zahnräder 14 um die Zahnrad-Drehachsen 15 an. Drehangetrieben wird insbesondere auch dasjenige Planeten-Zahnrad 14, welches von dem schaftartigen Aushebeelement 13 an dem nach oben ausgehobenen Düsenhalter 12 durchsetzt wird. Aufgrund entsprechender Geometrien der Innenaussparung 16 des Planeten-Zahnrades 14 einerseits und des Querschnittes des nach oben bewegten Aushebeelementes 13 andererseits wird das Aushebeelement 13 von dem Planeten-Zahnrad 14 in dessen Drehrichtung mitgenommen.

Bei entsprechender Drehrichtung des Revolver-Zustellmotors 21 wird der an der zu demontierenden Laserdüse 2 angeordnete Düsenhalter 12 über das zugeordnete Planeten-Zahnrad 14 und das an ihm angebrachte schaftartige Aushebeelement 13 in einer Demontage-Drehrichtung angetrieben. Der Düsenhalter 12 nimmt dabei die von ihm aufgenommene Laserdüse 2 in Demontage-Drehrichtung mit und die an dem Laserbearbeitungskopf 4 montierte Laserdüse 2 wird aus der Düsenaufnahme 3 des Laserbearbeitungskopfes 4 ausgeschraubt. Unter federnder Abstützung über den Düsenhalter 12 kann sich die Laserdüse 2 bei dem Ausschraubvorgang nach unten absenken. Der von dem Magazinrevolver 9 abgekuppelte Revolver-Zustellmotor 21, das Sonnen-Zahnrad 35, das betreffende Planeten-Zahnrad 14 sowie das von diesem angetriebene schaftartige Aushebeelement 13 bilden einen Drehantrieb 36 für den Düsenhalter 12.

Ist die auszutauschende Laserdüse 2 demontiert, so wird erneut der Hubantrieb 23 der Düsenwechselvorrichtung 1 betätigt. Die Hubplatte 26 der Hubvorrichtung 30 wird in Zustell-Hubrichtung 28 in ihre Ausgangsposition abgesenkt. Der mit der gebrauchten Laserdüse 2 bestückte Düsenhalter 12 ist dann wieder an dem Magazinrevolver 9 des Revolvermagazins 8 gelagert.

Die Hubvorrichtung 30 gestattet es, Düsenwechsel an der Laserbearbeitungsmaschine 5 auch bei unterhalb der Werkstückauflage 31 angeordneter Düsenwechselvorrichtung 1 durchzuführen. Insofern gewährleistet die Hubvorrichtung 30 eine besondere Flexibilität bei der Wahl des Einbauortes der Düsenwechselvorrichtung 1.

Ist der Düsenhalter 12 mit der gebrauchten Laserdüse 2 in den Magazinrevolver 9 abgesenkt und der Revolver-Zustellmotor 21 erneut an den Magazinrevolver 9 angekuppelt, wird der Revolver-Zustellmotor 21 betätigt und dadurch der Magazinrevolver 9 in der Revolver-Zustellrichtung 20 zugestellt, bis ein Düsenhalter 12 mit einer an dem Laserbearbeitungskopf 4 zu montierenden Laserdüse 2 in die Hub-Bereitschaftsposition gelangt. Unter erneutem Abkuppeln des Revolver-Zustellmotors 21 von dem Magazinrevolver 9 wird wiederum der Hubantrieb 23 betätigt. Über die Hubplatte 26 wird der mit der zu montierenden Laserdüse 2 versehene Düsenhalter 12 in Zustell-Hubrichtung 28 angehoben, bis die zu montierende Laserdüse 2 mit ihrem Gewinde auf dem Gewinde der Düsenaufnahme 3 an dem Laserbearbeitungskopf 4 stirnseitig aufsetzt. In vertikaler Richtung stützt sich die neue Laserdüse 2 dabei unter Federvorspannung auf dem Rand der Düsenaufnahme 3 an dem Laserbearbeitungskopf 4 ab. Wird nun der Revolver-Zustellmotor 21 mit entsprechender Drehrichtung betrieben, so wird über das Sonnen-Zahnrad 35 und das betreffende Planeten-Zahnrad 14 der nach oben angehobene Düsenhalter 12 mit der darin befindlichen Laserdüse 2 in Montage-Drehrichtung bewegt und dadurch die Laserdüse 2 in die Düsenaufnahme 3 des Laserbearbeitungskopfes 4 eingeschraubt.

Nach Beendigung des Einschraubvorganges wird der Hubantrieb 23 erneut betätigt und der nun leere Düsenhalter 12 wird zu dem Magazinrevolver 9 hin abgesenkt. Es ergeben sich damit Verhältnisse entsprechend den in Figur 5 dargestellten.

Ist der Magazinrevolver 9 wieder an den Revolver-Zustellmotor 21 angekuppelt, wird durch Betätigen des Revolver-Zustellmotors 21 die Blindstation 17 mit dem hohlzylinderartigen Durchlass 18 über die Schaftaufnahme 29 an der Hubplatte 26 der Hubvorrichtung 30 gedreht. Nach Schließen der Ausschleusklappe 33 und nach einer entsprechenden Relativbewegung von Laserbearbeitungskopf 4 und Werkstückauflage 31 sind die Verhältnisse gemäß Figur 4 wiederhergestellt. Die Düsenwechselvorrichtung 1 befindet sich nun erneut in dem Betriebszustand gemäß Figur 1. An der Laserbearbeitungsmaschine 5 kann der reguläre Schneidbetrieb wieder aufgenommen werden.

## Patentansprüche

1. Maschinelle Vorrichtung zur Montage und/oder zur Demontage einer Laserdüse (2) an einer Düsenaufnahme (3) einer Laserbearbeitungsmaschine (5) zum Bearbeiten von Werkstücken, insbesondere von Blechen (6),
• mit einem Düsenmagazin (8) mit einem Düsenhalterträger (9),
• mit einem Düsenhalter (12) für eine Laserdüse (2), der an dem Düsenhalterträger (9) des Düsenmagazins (8) gelagert ist sowie
• mit einem Träger-Zustellantrieb (19), mittels dessen der Düsenhalterträger (9) gemeinsam mit dem Düsenhalter (12) in einer Träger-Zustellrichtung (20) zustellbar ist
**dadurch gekennzeichnet, dass**
eine Hubvorrichtung (30) vorgesehen ist, mittels derer der in der Träger-Zustellrichtung (20) in eine Hub-Bereitschaftsposition zugestellte Düsenhalter (12) relativ zu dem Düsenhalterträger (9) in einer quer zu der Träger-Zustellrichtung (20) verlaufenden Zustell-Hubrichtung (28) zustellbar ist.

2. Maschinelle Vorrichtung nach Anspruch 1, **dadurch gekennzeichnet, dass** die Hubvorrichtung (30) ein Aushebeelement (13) umfasst, über welches der Düsenhalter (12) mittels eines Hubantriebes (23) der Hubvorrichtung (30) aus seiner Lagerung an dem Düsenhalterträger (9) aushebbar und in der Zustell-Hubrichtung (28) zustellbar ist.

3. Maschinelle Vorrichtung nach einem der vorhergehenden Ansprüche, **dadurch gekennzeichnet, dass** das Aushebeelement (13) schaftartig ausgebildet ist.

4. Maschinelle Vorrichtung nach einem der vorhergehenden Ansprüche, **dadurch gekennzeichnet, dass** das Aushebeelement (13) mit dem Düsenhalter (12) verbunden ist.

5. Maschinelle Vorrichtung nach einem der vorhergehenden Ansprüche, **dadurch gekennzeichnet, dass** die Hubvorrichtung (30) einen Heber (26) umfasst, welcher den in die Hub-Bereitschaftsposition zugestellten Düsenhalter (12) hintergreift und der mittels eines Hubantriebes (23) der Hubvorrichtung (30) gemeinsam mit dem in die Hub-Bereitschaftsposition zugestellten Düsenhalter (12) in der Zustell-Hubrichtung (28) zustellbar ist.

6. Maschinelle Vorrichtung nach einem der vorhergehenden Ansprüche, **dadurch gekennzeichnet, dass** der in der Zustell-Hubrichtung (28) zugestellte Düsenhalter (12) mittels eines Drehantriebes (36) um eine Düsenhalter-Drehachse (15) in einer Montage-Drehrichtung und/oder in einer Demontage-Drehrichtung antreibbar ist.

7. Maschinelle Vorrichtung nach einem der vorhergehenden Ansprüche, **dadurch gekennzeichnet, dass** der in der Zustell-Hubrichtung (28) zugestellte Düsenhalter (12) über das Aushebeelement (13) der Hubvorrichtung (30) mittels des Drehantriebes (36) um die Düsenhalter-Drehachse (15) in der Montage-Drehrichtung oder in der Demontage-Drehrichtung antreibbar ist.

8. Maschinelle Vorrichtung nach einem der vorhergehenden Ansprüche, **dadurch gekennzeichnet, dass** das Düsenmagazin (8) als Revolvermagazin ausgebildet ist und als solches einen Düsenhalterträger (9) in Form eines Magazinrevolvers aufweist, der mittels des Träger-Zustellantriebes (19) gemeinsam mit dem an dem Magazinrevolver gelagerten Düsenhalter (12) um eine Revolver-Drehachse (11) in der Träger-Zustellrichtung (20) zustellbar ist.

9. Laserbearbeitungsmaschine zum Bearbeiten von Werkstücken, insbesondere von Blechen (6), mit einer Düsenaufnahme (3) für eine Laserdüse (2), **gekennzeichnet durch** eine maschinelle Vorrichtung (1) nach einem der Ansprüche 1 bis 8 zur Montage und/oder zur Demontage einer Laserdüse (2) an der Düsenaufnahme (3).

## Claims

1. Mechanical device for mounting and/or dismounting a laser nozzle (2) at a nozzle mounting (3) of a laser processing machine (5) for processing workpieces, especially metal sheets (6),
• having a nozzle magazine (8) with a nozzle holder support (9),
• having a nozzle holder (12) for a laser nozzle (2), which nozzle holder (12) is supported on the nozzle holder support (9) of the nozzle magazine (8), and
• having a support positioning drive (19) by means of which the nozzle holder support (9) together with the nozzle holder (12) is positionable in a support positioning direction (20),
**characterised in that**
a lifting device (30) is provided by means of which the nozzle holder (12) positioned in a lifting readiness position in the support positioning direction (20) is positionable relative to the nozzle holder support (9) in a positioning lifting direction (28) extending transversely to the support positioning direction (20).

2. Mechanical device according to claim 1, **characterised in that** the lifting device (30) includes a lifting-out element (13) via which the nozzle holder (12) can be lifted out of its storage location on the nozzle holder support (9) and positioned in the positioning lifting direction (28) by means of a lifting drive (23) of the lifting device (30).

3. Mechanical device according to either of the preceding claims, **characterised in that** the lifting-out element (13) is of a shank-like configuration.

4. Mechanical device according to any one of the preceding claims, **characterised in that** the lifting-out element (13) is connected to the nozzle holder (12).

5. Mechanical device according to any one of the preceding claims, **characterised in that** the lifting device (30) includes a lifter (26) which engages behind the nozzle holder (12) positioned in the lifting readiness position and which, by means of a lifting drive (23) of the lifting device (30), is positionable in the positioning lifting direction (28) together with the nozzle holder (12) positioned in the lifting readiness position.

6. Mechanical device according to any one of the preceding claims, **characterised in that** the nozzle holder (12) positioned in the positioning lifting direction (28) is drivable by means of a rotary drive (36) about a nozzle holder rotation axis (15) in a mounting rotation direction and/or in a dismounting rotation direction.

7. Mechanical device according to any one of the preceding claims, **characterised in that** the nozzle holder (12) positioned in the positioning lifting direction (28) is drivable about the nozzle holder rotation axis (15) in the mounting rotation direction or in the dismounting rotation direction by means of the rotary drive (36) via the lifting -out element (13) of the lifting device (30).

8. Mechanical device according to any one of the preceding claims, **characterised in that** the nozzle magazine (8) is configured as a turret magazine and as such has a nozzle holder support (9) in the form of a magazine turret which is positionable together with the nozzle holder (12) supported on the magazine turret about a turret rotation axis (11) in the support positioning direction (20) by means of the support positioning drive (19).

9. Laser processing machine for processing workpieces, especially metal sheets (6), having a nozzle mounting (3) for a laser nozzle (2), **characterised by** a mechanical device (1) according to any one of claims 1 to 8 for mounting and/or dismounting a laser nozzle (2) at the nozzle mounting (3).

## Revendications

1. Dispositif mécanique destiné au montage et/ou au démontage d'une tuyère laser (2) sur un logement (3) de tuyère d'une machine (5) de traitement laser affectée à l'usinage de pièces, en particulier de tôles (6), comprenant
• un magasin (8) à tuyères, muni d'un support (9) de porte-tuyères,
• un porte-tuyère (12) destiné à une tuyère laser (2) et supporté sur ledit support (9) de porté-tuyères dudit magasin (8) à tuyères,
• ainsi qu'un entraînement de positionnement (19) au moyen duquel ledit support (9) de porté-tuyères peut être positionné dans une direction (20) de positionnement du support, conjointement audit porte-tuyère (12),
**caractérisé**
**par** la présence d'un dispositif de levage (30) au moyen duquel le porte-tuyère (12), positionné à un emplacement d'attente de levage dans la direction (20) de positionnement du support, peut être positionné vis-à-vis dudit support (9) de porté-tuyères, dans une direction (28) de levage de présentation qui s'étend transversalement par rapport à ladite direction (20) de positionnement du support.

2. Dispositif mécanique selon la revendication 1, **caractérisé par le fait que** le dispositif de levage (30) englobe un élément de levage (13) par l'intermédiaire duquel, au moyen d'un entraînement élévateur (23) dudit dispositif de levage (30), le porte-tuyère (12) peut être soulevé à l'écart de son support sur le support de porte tuyères (9), et peut être positionné dans la direction (28) de levage de présentation.

3. Dispositif mécanique selon l'une des revendications précédentes, **caractérisé par le fait que** l'élément de levage (13) est réalisé à la manière d'un fût.

4. Dispositif mécanique selon l'une des revendications précédentes, **caractérisé par le fait que** l'élément de levage (13) est relié au porte-tuyère (12).

5. Dispositif mécanique selon l'une des revendications précédentes, **caractérisé par le fait que** le dispositif de levage (30) englobe un élévateur (26) qui emprisonne, par-derrière, le porte-tuyère (12) positionné à l'emplacement d'attente de levage et qui peut être positionné au moyen d'un entraînement élévateur (23) dudit dispositif de levage (30), conjointement audit porte-tuyère (12) positionné audit emplacement d'attente de levage, dans la direction (28) de levage de présentation.

6. Dispositif mécanique selon l'une des revendications précédentes, **caractérisé par le fait que** le porte-tuyère (12), positionné dans la direction (28) de levage de présentation, peut être entraîné dans un sens de rotation de montage et/ou dans un sens de rotation de démontage, autour d'un axe de rotation (15), au moyen d'un entraînement en rotation (36).

7. Dispositif mécanique selon l'une des revendications précédentes, **caractérisé par le fait que** le porte-tuyère (12), positionné dans la direction (28) de levage de présentation, peut être entraîné dans le sens de rotation de montage ou dans le sens de rotation de démontage autour de l'axe de rotation (15), au moyen de l'entraînement en rotation (36), par l'intermédiaire de l'élément de levage (13) du dispositif de levage (30).

8. Dispositif mécanique selon l'une des revendications précédentes, **caractérisé par le fait que** le magasin (8) à tuyères est réalisé sous la forme d'un magasin tournant et offre, en tant que tel, un support (9) de porte-tuyères qui revêt la forme d'un barillet de stockage pouvant être positionné dans la direction (20) de positionnement du support autour d'un axe de rotation (11), au moyen de l'entraînement de positionnement (19), conjointement au porte-tuyère (12) supporté sur ledit barillet de stockage.

9. Machine de traitement laser pour l'usinage de pièces, notamment de tôles (6), munie d'un logement (3) destiné à une tuyère laser (2), **caractérisée par** un dispositif mécanique (1) selon l'une des revendications 1 à 8, destiné au montage et/ou au démontage d'une tuyère laser (2) sur ledit logement (3).
